# EUROPÄISCHE PATENTSCHRIFT

(11) **EP 1 748 253 B1**
(45) Veröffentlichungstag und Bekanntmachung des Hinweises auf die Patenterteilung: **02.12.2020**
(21) Anmeldenummer: 06117826.5
(22) Anmeldetag: 25.07.2006
(51) Int. Cl.: F23R 3/00, F23M 5/00, F02K 9/64

(54) **Brennkammer und Verfahren zur Herstellung einer Brennkammer**
Combustion chamber and method for producing a combustion chamber
Chambre de combustion et procédé de fabrication d'une chambre de combustion

(30) Priorität: 26.07.2005 DE 102005036137
(43) Veröffentlichungstag der Anmeldung: 31.01.2007
(73) Patentinhaber: Deutsches Zentrum für Luft- und Raumfahrt e.V., 51147 Köln (DE)
(72) Erfinder: Hald, Hermann, 71287, Weissach (DE); Fischer, Ingo, 70199, Stuttgart (DE); Ortelt, Markus, 74078, Heilbronn (DE)
(74) Vertreter: Hoeger, Stellrecht & Partner Patentanwälte mbB

(56) Entgegenhaltungen:
- FR-A- 1 419 581
- US-A- 3 153 320
- US-A- 3 305 178
- US-A- 3 353 359
- US-A- 3 557 553
- US-A- 3 585 800
- US-A- 3 863 443
- US-A- 3 925 983
- US-A- 4 703 620
- US-A- 6 151 887
- US-A1- 2004 128 979
- US-A1- 2004 128 980
- US-B1- 6 418 973

## Beschreibung

Die Erfindung betrifft eine Brennkammer, umfassend einen Außenmantel und einen Innenmantel, welcher einen Brennraum begrenzt und welcher zur Effusionskühlung oder Transpirationskühlung fluiddurchlässig ist, wobei der Innenmantel eine Mehrzahl von längs einer axialen Achse aufeinanderfolgenden Scheibenelementen umfasst.

Die Erfindung betrifft ferner ein Verfahren zur Herstellung einer Brennkammer mit einem Außenmantel und einem für Fluid zur Effusionskühlung oder Transpirationskühlung durchlässigen Innenmantel, bei dem der Innenmantel aus axial aufeinanderfolgenden Scheibenelementen hergestellt wird.

Bei der Effusionskühlung oder Transpirationskühlung wird Kühlungsfluid insbesondere durch Poren im Innenmantel in den Brennraum gepresst. Dort bildet es an der Brennkammerinnenwand einen Grenzschichtfilm aus, welcher heiße Verbrennungsprodukte von der Wand abschirmt und den konvektiven Wärmeübergang von dem Brennraum in den Innenmantel verringert. Bei Verwendung eines flüssigen Kühlfluids wird ein zusätzlicher Kühleffekt dadurch erzielt, dass das Kühlfluid verdampft und dabei latente Wärme aufnimmt.

Als Effusionskühlung wird üblicherweise eine Schwitzkühlung ohne Phasenübergang und als Transpirationskühlung eine Schwitzkühlung mit Phasenübergang bezeichnet.

Aus der WO 99/04156 A1 ist eine Brennkammer, insbesondere für ein Raketentriebwerk, bekannt, welche einen Brennraum, einen den Brennraum umschließenden Innenmantel, einen den Innenmantel umschließenden Außenmantel und zwischen dem Innenmantel und dem Außenmantel ausgebildete Kühlmittelkanäle umfasst, wobei der Außenmantel aus einem Faserkeramikmaterial gebildet ist und der Innenmantel aus einem faserkeramischen Material oder aus Graphit gebildet ist.

Weiter offenbaren US 3153320 A, US 3305178 A, US 3557553 A, US 6151887 A, US 2004/128980 A1 und US 2004/128979 A1 Brennkammern nach dem Stand der Technik.

Ferner ist in dieser Druckschrift ein Verfahren zur Herstellung einer Brennkammer offenbart, bei welchem ein Innenmantel-Vorkörper aus einem faserverstärkten Kunststoff hergestellt wird, der Innenmantel-Vorkörper pyrolisiert wird, ein Außenmantel-Vorkörper aus faserverstärktem Kunststoff auf den pyrolisierten Innenmantel-Vorkörper aufgebracht wird, das aus dem Innenmantel-Vorkörper und dem Außenmantel-Vorkörper gebildete Bauteil pyrolisiert wird und Silicium zu dem pyrolisieren Außenmantel-Vorkörper zur Bildung einer Silicium-Matrix dem Material des Außenmantels zugeführt wird.

Davon ausgehend liegt der Erfindung die Aufgabe zugrunde, eine Brennkammer der eingangs genannten Art bereitzustellen, welche auf einfache Weise herstellbar ist und welche eine hohe radiale Materialdruckfestigkeit aufweist.

Die Erfindung ist eine Brennkammer nach Anspruch 1 und ein Verfahren zur Herstellung einer Brennkammer nach Anspruch 29.

Diese Aufgabe wird bei der oben genannten Brennkammer erfindungsgemäß dadurch gelöst, dass Scheibenelemente aus einem Faserverbundwerkstoff hergestellt sind, dass die Scheibenelemente aus einer Platte mit gerichteter Faserorientierung in mindestens einer Richtung hergestellt sind, dass in den Scheibenelementen Fasern quer zur axialen Achse orientiert sind, und dass an den Scheibenelementen mindestens ein Teil der Fasern in einer oder mehreren radialen Richtungen orientiert sind.

Durch das Vorsehen von Scheibenelementen lässt sich der Innenmantel bezüglich der radialen Eigenschaften optimiert ausbilden. Durch eine Ausbildung über Scheibenelemente tritt kein Konflikt mit einem axialen Wandverlauf auf. Dadurch kann insbesondere die Fluiddurchströmung in radialer Richtung optimiert werden und es lässt sich eine hohe radiale Materialdruckfestigkeit insbesondere über radiale Faseranordnung erreichen.

Kontureinschliffe von außen sind ohne strukturelle Komplikationen realisierbar. Bei faserverstärkten Scheibenelementen werden Faserlagen durch Kontureinschliffe höchstens an den Rändern beeinträchtigt.

In transienten Betriebsphasen wie Zündung und Abschaltung einer Brennkammer können aufgrund von starken Änderungen im Brennkammerinnendruck kurzzeitig große radiale Druckdifferenzen im fluiddurchlässigen Innenmantel auftreten. Beispielsweise hat man beim Anfahren eines Triebwerks, welches die entsprechende Brennkammer umfasst, solange die Zündung noch nicht erfolgt ist und die Kühlung mittels eines voreingestellten Kühlfluidmassenstroms bereits aktiviert wurde, eine relativ große Druckdifferenz über die Innenmantelwand. Sie wird aufgrund der Kompressibilität des Kühlfluids bei konstantem Kühlfluidmassenstrom um so geringer, je höher der absolute Betriebsdruck steigt. Sie kann im stationären Betrieb auf eine Größenordnung von 1 bis 2 bar oder sogar unter 0,5 bar absinken, wenn der Brennkammerdruck im Bereich von 100 bar liegt. Dies ist abhängig von der Porosität des Innenmantels.

Da sich durch die Scheibenelemente eine hohe radiale Materialdruckfestigkeit für den Innenmantel erreichen lässt, können die Druckdifferenzen in solchen transienten Betriebsphasen ohne Delaminationsgefahr aufgenommen werden (wenn eine axiale Verspannung vorliegt).

Durch die Zusammensetzung von Scheibenelementen lassen sich unterschiedliche Scheibenelemente getrennt ausbilden und anpassen, so dass eine lokale Anpassung des Innenmantels ermöglicht ist. Dazu lässt sich gezielt die radiale Fluiddurchlässigkeit und auch die axiale Fluiddurchlässigkeit lokal einstellen. Auch andere Einflussparameter wie beispielsweise Kanalgeometrien lassen sich gezielt einstellen.

Beispielsweise kann bei einem Einkreis-Kühlsystem mit gleichem Versorgungsdruck die Druckdifferenz in einem konvergenten Brennraumteil ansteigen, da der Druck im Brennraum stromabwärts fällt. Die Fluiddurchlässigkeit (die Permeabilität) des Innenmantels lässt sich über die Ausbildung mit Scheibenelementen so einstellen, dass trotzdem Kühlungsfluid gleichmäßig in den Brennraum zur Ausbildung des Grenzschichtfilms einkoppelbar ist.

Es ist grundsätzlich möglich, dass der Innenmantel einstückig ausgebildet ist, wobei die Scheibenelemente dann über die Mikrostruktur realisiert sind. Es ist auch möglich, dass getrennte Scheibenelemente vorgesehen sind, die durch axiale Verspannung zu einem Verbund zusammengefügt sind. Es können dabei zusätzlich oder alternativ adhäsive Verbindungen (Verklebungen) und/oder Formschlussverbindungen zwischen Scheibenelementen vorgesehen sein. Scheibenelemente sind aus einem Faserverbundwerkstoff hergestellt. Dadurch lässt sich eine gezielte Quer-Verstärkung insbesondere in radialer Richtung erreichen, um eine hohe radiale Materialfestigkeit zu erreichen. Ferner lässt sich bei entsprechender Ausrichtung der Fasern eine hohe radiale Fluiddurchlässigkeit (im Vergleich zur axialen Fluiddurchlässigkeit) erhalten. Eine hohe radiale Fluiddurchlässigkeit wiederum ermöglicht eine effektive Effusionskühlung bzw. Transpirationskühlung.

Ein Scheibenelement ist aus einer Platte mit gerichteter Faserorientierung in mindestens einer Richtung der Plattenebene hergestellt. Die Platte ist beispielsweise mittels Gewebelagen mit senkrechter Orientierung (0°/90°-Gewebe) hergestellt. Aus einer solchen Platte lässt sich eine Scheibe herausarbeiten. Die Platte weist bereits eine ebene Oberfläche auf und ist selber auf einfache Weise herstellbar.

Bei einer Ausführungsform ist es vorgesehen, dass benachbarte Scheibenelemente aneinanderstoßen. Die Scheibenelemente lassen sich dadurch getrennt individuell herstellen und dann zusammenfügen.

Insbesondere weist ein Scheibenelement eine Ausnehmung zur Bildung eines Teilbereichs des Brennraums auf. Die Ausnehmung lässt sich beispielsweise durch mechanische Bearbeitung herstellen.

Die Brennkammer ist auf einfache Weise herstellbar, wenn die Scheibenelemente individuell hergestellt sind.

Insbesondere weisen Scheibenelemente zu benachbarten Scheibenelementen hin im Wesentlichen ebene Oberflächen auf. Dadurch lässt sich auf einfache Weise ein Verbund erreichen. Beispielsweise ist es dadurch auch auf einfache Weise möglich, zwischen benachbarten Scheibenelementen eine Dichtung, beispielsweise in Form einer Foliendichtung, anzuordnen. Es können an der Oberfläche abgesetzte Einrichtungen zur Herstellung von Formschlussverbindungen vorhanden sein.

Günstigerweise ist der Brennraum radialsymmetrisch um die axiale Achse ausgebildet, um einen hohen Symmetriegrad für die Verbrennung im Brennraum zu erreichen.

Es kann vorgesehen sein, dass der Faserverbundwerkstoff ein keramischer Werkstoff ist, welcher eine entsprechende Porosität aufweist. Beispielsweise wird C/C-SiC verwendet.

Es hat sich als günstig gezeigt, wenn die Scheibenelemente aus C/C-Werkstoff hergestellt sind. Es handelt sich dabei um einen porösen Werkstoff, welcher faserverstärkt ist.

Insbesondere weist die Platte Fasergelege oder Fasergewebe mit einer Faserorientierung in einer ersten Richtung und einer zweiten Richtung quer zur ersten Richtung auf. Die beiden Richtungen liegen insbesondere senkrecht zueinander. Dadurch ist es möglich, radiale Faserorientierungen ohne axialen Faserverlauf bereitzustellen, um eine hohe radiale Materialfestigkeit des Innenmantels zu erreichen. Weiterhin besteht dann auch kein Konflikt mit einem Schichtverlauf mit dem Innenmantel und einem Innenkonturverlauf, so dass grundsätzlich beliebige Innenkonturen und damit beliebige Brennraumkonturen herstellbar sind. Dies gilt sinngemäß auch für den Außenkonturverlauf.

An einem Scheibenelement sind Fasern quer zur axialen Achse orientiert und in einer oder mehreren radialen Richtungen orientiert. Die Fasern liegen über die Scheibenelemente nicht parallel zur axialen Richtung sondern quer zu dieser. Dadurch ergibt sich eine hohe radiale Materialfestigkeit. Weiterhin lässt sich die Fluiddurchlässigkeit in der radialen Richtung im Vergleich zur Fluiddurchlässigkeit in der axialen Richtung erhöhen und dadurch wiederum eine effektive Effusionskühlung bzw. Transpirationskühlung bewirken.

An einem Scheibenelement sind mindestens ein Teil der Fasern in einer oder mehreren radialen Richtungen orientiert.

Es kann vorgesehen sein, dass unterschiedliche Scheibenelemente mit unterschiedlicher Faserorientierung bezogen auf eine Achse senkrecht zur axialen Achse angeordnet sind. Dadurch lässt sich lokal die radiale und auch die axiale Fluiddurchlässigkeit einstellen. Je nach Orientierung der Scheibenelemente bezüglich der Faserorientierung lassen sich Vorzugsrichtungen einstellen oder auch vermeiden.

Beispielsweise sind Fasern eines ersten Scheibenelements in einer ersten radialen Richtung orientiert und Fasern eines zweiten Scheibenelements in einer zweiten radialen Richtung orientiert, wobei die erste radiale Richtung und die zweite radiale Richtung in einem spitzen Winkel zueinander liegen. Dadurch lassen sich Fasern in unterschiedlichen radialen Richtung orientieren, um entsprechend eine hohe radiale Fluiddurchlässigkeit zu erreichen.

Es kann vorgesehen sein, dass die radiale Faserorientierungsrichtung von Scheibenelementen sich längs der axialen Achse um ansteigende Winkelschritte ändert. Insbesondere werden die Winkelschritte zyklisch variiert. Sie liegen beispielsweise in der Größenordnung von 20°. Ausgehend von einem ersten Scheibenelement ist beispielsweise ein nächstes Scheibenelement in der Faserorientierung um einen Winkel α gedreht, beispielsweise ein übernächstes Scheibenelement um einen Winkel 2α, ein überübernächstes Scheibenelement um einen Winkel 3α usw. Dadurch lässt sich über eine gewisse Anzahl von Scheibenelementen der ganze Winkelbereich von 360° durchlaufen und über einen Innenmantel lässt sich bei entsprechender Dicke der Scheibenelemente der Winkelbereich auch mehrfach durchlaufen. Dadurch lässt sich eine über den Umfang gesehene gleichmäßige radiale Fluiddurchlässigkeit erreichen.

Es kann vorgesehen sein, dass ein Scheibenelement aus einer Mehrzahl von einzelnen Segmenten zusammengesetzt ist. Dies ist insbesondere vorteilhaft, wenn der Brennraum einen entsprechenden hohen Durchmesser aufweist. Die einzelnen Segmente werden zu einem Scheibenelement zusammengesetzt, wobei beispielsweise bei der Herausarbeitung von einzelnen Segmenten aus einer Platte sich Material sparen lässt.

Ganz besonders vorteilhaft ist es, wenn die radiale Fluiddurchlässigkeit des Innenmantels größer ist als die axiale Fluiddurchlässigkeit. Dadurch lässt sich eine effektive Effusionskühlung bzw. Transpirationskühlung erreichen. Es lässt sich ein radial von außen nach innen gerichteter Wandkühlfluidmassenstrom einstellen, der in seiner Intensität dem lokalen Wandwärmefluss und damit der lokalen Kühlerfordernis anpassbar ist.

Insbesondere ist die radiale Fluiddurchlässigkeit mindestens zweifach und vorzugsweise ca. dreifach (oder noch größer) größer als die axiale Fluiddurchlässigkeit. Dadurch erhält man eine effektive Kühlbarkeit der Brennkammer.

Es kann dabei grundsätzlich vorgesehen sein, dass unterschiedliche Scheibenelemente unterschiedliche Fluiddurchlässigkeiten aufweisen. Dies kann über unterschiedliche Materialverwendung für unterschiedliche Scheibenelemente und/oder unterschiedliche Porositäten erreicht werden. Beispielsweise können unterschiedliche Scheibenelemente auch unterschiedliche axiale Dicken aufweisen.

Es ist auch möglich, dass beispielsweise über Gasphaseninfiltration des entsprechenden Grundmaterials eines Scheibenelements eine Gradierung des Werkstoffs durch unterschiedlich starke Ablagerung von von außen eingebrachten Materialien bzw. über durchgeführte Reaktionen in dem Scheibenelement erreicht wird.

Günstig ist es, wenn zwischen benachbarten Scheibenelementen eine Dichtung angeordnet ist. Diese dient zur Verhinderung von Spaltströmen zwischen aneinandergrenzenden Scheibenelementen.

Beispielsweise ist eine Dichtung als Foliendichtung ausgebildet. Mit dieser lässt sich auf einfache Weise eine Abdichtung erreichen und sie lässt sich auch auf einfache Weise positionieren, beispielsweise über Zentrierabsätze oder Nuten.

Bei einer Ausführungsform ist ein inneres Scheibenelement in einem äußeren Scheibenelement angeordnet. Dadurch ist es möglich, für den Innenring und den Außenring (wobei mehrere Außenringe vorgesehen sein können, die wiederum aufeinander sitzen), unterschiedliche Charakteristika auszubilden. Es ist beispielsweise auch möglich, dass Außenringe aus einem anderen Material hergestellt werden als Innenringe. Dadurch ist es wiederum beispielsweise möglich, eine Oxidationsschutzbarriere auszubilden, falls lokal ein Einbrand erfolgen sollte.

Um Scheibenelemente in einem Verbund zu halten, ist eine axiale Verspannung vorgesehen. Dadurch lassen sich Scheibenelemente getrennt herstellen und dann zu einem Verbund zusammenfügen. Die axiale Verspannung wird bei einer Ausführungsform über den Außenmantel abgetragen.

Beispielsweise werden Scheibenelemente in einem Gehäuse angeordnet, durch welches eine Zentrierung und eine äußere axiale Verspannung ermöglicht ist.

Alternativ oder zusätzlich ist es möglich, dass Zuganker vorgesehen sind, um Scheibenelemente axial zu verspannen und in einem Verbund zu halten.

Es ist auch alternativ oder zusätzlich möglich, dass eine Verbindungseinrichtung mit einer Mehrzahl von Scheibenelementen verbunden ist.

Beispielsweise ist die Verbindungseinrichtung aus einem Faserverbundwerkstoff hergestellt, und beispielsweise als Wicklung ausgebildet, welche (beispielsweise in der Art eines Buchrückens) die Scheibenelemente zusammenhält.

Günstigerweise sind an dem Innenmantel Kühlfluidverteilungskanäle zugeordnet. Über die Kühlfluidverteilungskanäle lässt sich in einem Kühlsystem Kühlfluid dem Innenmantel zuführen, wobei Kühlfluid dann durch die Innenmantelwand aufgrund deren Fluiddurchlässigkeit in den Brennraum einströmen kann und dort einen Grenzschichtfilm ausbilden kann. Insbesondere lässt sich Kühlfluid schnell einer Innenmantelaußenfläche zuführen.

Es ist grundsätzlich auch möglich, dass Scheibenelemente einstückig miteinander verbunden sind. Beispielsweise werden Gewebelagen aufeinander geschichtet und es wird dann beispielsweise ein Infiltrationsverfahren durchgeführt, um einen Innenmantel-Vorkörper herzustellen.

Der Erfindung liegt ferner die Aufgabe zugrunde, ein Verfahren der eingangs genannten Art bereitzustellen, welches auf einfache Weise durchführbar ist.

Diese Aufgabe wird bei dem eingangs genannten Verfahren erfindungsgemäß dadurch gelöst, dass die Scheibenelemente aus einem faserverstärkten Werkstoff hergestellt werden, dass die Scheibenelemente aus einer Platte mit gerichteter Faserorientierung in mindestens einer Richtung hergestellt werden, und dass an den Scheibenelementen mindestens ein Teil der Fasern in einer oder mehreren radialen Richtungen orientiert sind.

Das erfindungsgemäße Verfahren weist die bereits im Zusammenhang mit der erfindungsgemäßen Brennkammer erläuterten Vorteile auf.

Weitere vorteilhafte Ausführungsformen wurden ebenfalls bereits im Zusammenhang mit der erfindungsgemäßen Brennkammer erläutert.

Beispielsweise werden Scheibenelemente getrennt hergestellt und zu einem Verbund zusammengesetzt. Es lassen sich dann einzelne Scheibenelemente individuell optimieren. Dadurch lässt sich die Brennkammer optimal anpassen.

Beispielsweise werden Scheibenelemente aus einem Plattenmaterial hergestellt. Dadurch ergibt sich eine effektive und kostengünstige Herstellung, wobei auch auf einfache Weise eine Querfaserorientierung zu einer axialen Achse erreichbar ist.

Scheibenelemente werden aus einem faserverstärkten Werkstoff hergestellt. Dadurch lässt sich bei entsprechender Ausbildung der Scheibenelemente eine hohe radiale Materialfestigkeit und eine im Vergleich zur axialen Fluiddurchlässigkeit hohe radiale Fluiddurchlässigkeit erreichen.

Insbesondere ist der Werkstoff durch Fasergewebe oder Fasergelege verstärkt. Dadurch lässt sich auf einfache Weise eine Querfaserorientierung zur axialen Achse erreichen und dadurch wiederum eine hohe radiale Materialfestigkeit und eine hohe radiale Fluiddurchlässigkeit.

Günstig ist es, wenn zwischen benachbarten Scheibenelementen Dichtungen angeordnet werden, um Spaltströmungen zu vermeiden.

Es ist auch möglich, dass Scheibenelemente durch Aneinanderreihen von Gewebelagen oder Gewirkelagen hergestellt werden und anschließend beispielsweise eine Infiltration durchgeführt wird mit nachfolgender Konsolidierung, Härtung oder Pyrolyse. Dadurch lässt sich eine entsprechende poröse Mikrostruktur erzeugen mit hoher radialer Materialfestigkeit und hoher radialer Fluiddurchlässigkeit.

Günstig ist es, wenn bei der Herstellung des Außenmantels ein Eindringen von Außenmantelmaterial in den Innenmantel verhindert wird. Üblicherweise wird zuerst der Innenmantel hergestellt und auf dem Innenmantel wird dann der Außenmantel hergestellt. Wenn bei diesem Herstellungsprozess Außenmantelmaterial in den Innenmantel eindringt, dann kann dies zu einer Verschlechterung der Fluiddurchlässigkeit führen.

Beispielsweise werden Kühlmittelverteilerkanäle am Innenmantel mit einem entfernbaren Material gefüllt. Dieses entfernbare Material ist beispielsweise herausschmelzbar wie Wachs oder herauslösbar. Dadurch lässt sich der Außenmantel beispielsweise über Nassumwicklung am Innenmantel herstellen.

Es kann auch vorgesehen sein, dass an Kontaktflächen des Innenmantels ein Schutzmaterial oder Trennmaterial angeordnet wird, um ein Eindringen in Poren des Innenmantels zu verhindern.

Beispielsweise kann eine Belegung mit CFK mit thermoplastischer Matrix erfolgen, wobei die Matrix nur kurzzeitig lokal aufgeschmolzen wird und damit ein Eindringen in das poröse Material vermieden wird.

Die nachfolgende Beschreibung bevorzugter Ausführungsformen dient im Zusammenhang mit der Zeichnung der näheren Erläuterung der Erfindung. Es zeigen:
- Figur 1: eine schematische Schnittansicht eines Ausführungsbeispiels einer erfindungsgemäßen Brennkammer;
- Figur 2: eine Schnittansicht längs der Linie 2-2 gemäß Figur 1;
- Figur 3: eine schematische Teildarstellung eines ersten Ausführungsbeispiels eines Innenmantels;
- Figur 4: eine schematische Darstellung eines zweiten Ausführungsbeispiels eines Innenmantels;
- Figur 5: eine schematische Darstellung eines dritten Ausführungsbeispiels eines Innenmantels;
- Figur 6: eine schematische Darstellung eines vierten Ausführungsbeispiels eines Innenmantels; und
- Figur 7: eine schematische Darstellung eines fünften Ausführungsbeispiels eines Innenmantels.

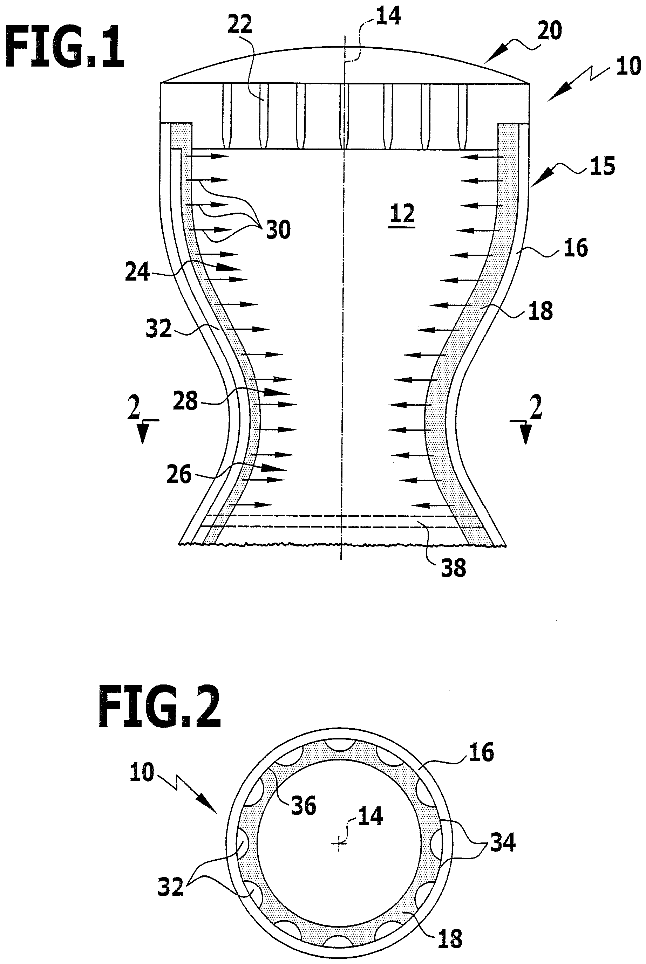

Ein Ausführungsbeispiel einer erfindungsgemäßen Brennkammer, welches in Figur 1 gezeigt und dort mit 10 bezeichnet ist, umfasst einen Brennraum 12, welcher um eine axiale Achse 14 im Wesentlichen rotationssymmetrisch ausgebildet ist. Der Brennraum 12 ist in einem Brennkammermantel 15 gebildet. Der Brennkammermantel 15 umschließt den Brennraum 12 seitlich.

Der Brennkammermantel 15 umfasst einen Außenmantel 16 und einen Innenmantel 18.

An dem Brennkammermantel 15 ist an einem Ende ein Einspritzkopf 20 angeordnet, welcher in den Brennraum 12 mündende Einspritzdüsen 22 aufweist. Über den Einspritzkopf lässt sich Brennstoff und Oxidator in den Brennraum 12 einkoppeln.

Der Brennraum 12 kann durch entsprechende Formgebung des Brennkammermantels 15 tailliert ausgebildet sein mit einem bezogen auf die axiale Achse 14 von dem Einspritzkopf 20 weg konvergenten (Düsen-)Bereich 24 und einem divergenten (Düsen-)Bereich 26, wobei ein Taillenbereich 28 am Übergang zwischen dem konvergenten Bereich 24 zu dem divergenten Bereich 26 liegt.

Der Außenmantel 16 bildet die tragende Struktur für den Brennkammermantel 15. Er ist beispielsweise aus einem keramischen Material und insbesondere faserverstärkten keramischen Material wie C/C-SiC hergestellt oder aus einem faserverstärkten Kunststoffmaterial hergestellt.

Der Innenmantel 18 ist fluiddurchlässig ausgebildet, so dass ein Kühlungsfluid (in Flüssigform oder Gasform) durch den Innenmantel 18 durchströmen kann. Dadurch lässt sich eine Effusionskühlung oder Transpirationskühlung für die Brennkammer 10 ausbilden. Als Effusionskühlung wird üblicherweise eine Schwitzkühlung ohne Phasenübergang und als Transpirationskühlung eine Schwitzkühlung mit Phasenübergang bezeichnet.

Der Kühlfluiddurchgang durch den Innenmantel 18 erfolgt im Wesentlichen über die ganze Fläche des Innenmantels 18. Dies ist in Figur 1 durch die Pfeile mit dem Bezugszeichen 30 angedeutet. Insbesondere ist der Innenmantel 18 über Bereitstellung einer Porosität und insbesondere offenen Porosität fluiddurchlässig ausgebildet.

Dem Innenmantel 18 sind Kühlfluidverteilungskanäle 32 zugeordnet (Figur 2), welche beispielsweise um die axiale Achse 14 gleichmäßig verteilt angeordnet sind. Sie folgen (in einer zu definierenden Weise) der Kontur des Innenmantels 18. Beispielsweise sind sie durch entsprechende rinnenförmige Ausnehmungen an einer Außenseite des Innenmantels 18 gebildet.

Der Außenmantel 16 berührt den Innenmantel 18 an Kontaktflächen 34. Entsprechende Kontaktflächen 36 des Innenmantels 18 liegen außerhalb der Fluidverteilungskanäle 32.

Beispiele solcher Brennkammern sind in der WO 99/04156 A1 beschrieben, auf die ausdrücklich Bezug genommen wird.

Erfindungsgemäß ist es vorgesehen, dass der Innenmantel 18 aus einer Mehrzahl von Scheibenelementen 38 zusammengesetzt ist. Die Scheibenelemente sind beispielsweise massive Elemente, die aneinandergereiht sind, oder sind durch die Mikrostruktur des Innenmantels 18 realisiert.

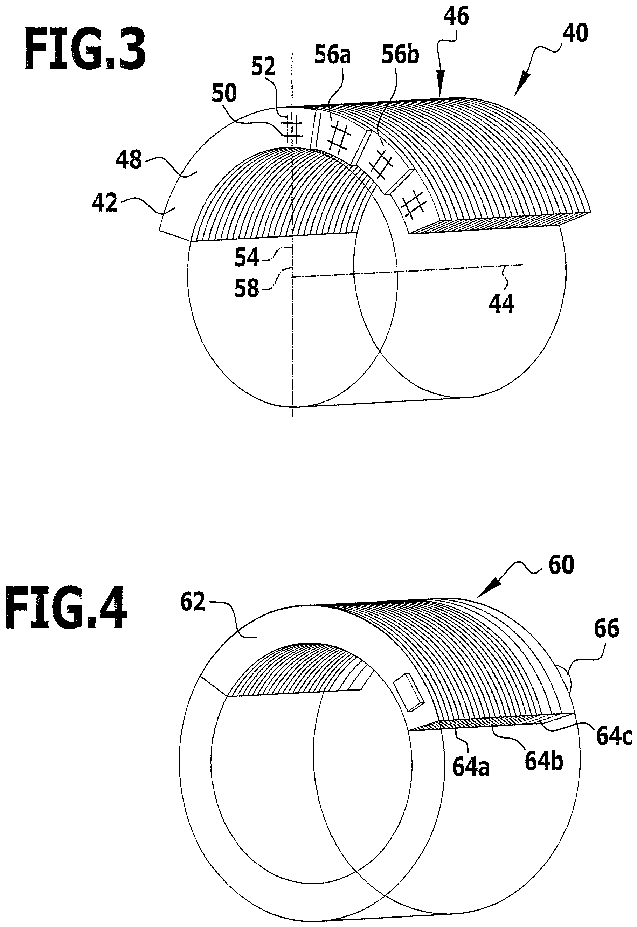

Bei einem ersten Ausführungsbeispiel eines Innenmantels 40, welcher in Figur 3 schematisch gezeigt ist, ist eine Mehrzahl von individuell hergestellten Scheibenelementen 42 durch axiale Aneinanderreihung längs der axialen Achse 44 zu einem Verbund 46 zusammengesetzt.

Die Scheibenelemente 42 sind dabei individuell hergestellt und werden nachträglich zusammengesetzt.

Beispielsweise werden die Scheibenelemente 42 aus einem ebenen Plattenmaterial herausgearbeitet. Die Scheibenelemente 42 weisen dann zu benachbarten Scheibenelementen hin eine im Wesentlichen ebene Oberfläche 48 auf.

Das Plattenmaterial ist ein faserverstärktes Material mit Fasern, welche unidirektional beispielsweise in einer ersten Richtung 50 und in einer zweiten Richtung 52 senkrecht zur ersten Richtung orientiert sind. Eine solche Faserorientierung lässt sich über ein 0°/90°-Fasergewebe oder Fasergewirke oder Fasergelege mit senkrecht zueinander orientierten Fasern herstellen. Ein Scheibenelement 42 kann dabei eine solche Lage oder mehrere solcher Lagen aufweisen.

Aus dem Plattenmaterial kann die Kontur des Scheibenelements 42 herausgearbeitet werden. Durch eine innere Ausnehmung wird ein Teilbereich des Brennraums 12 hergestellt. Dies kann durch mechanische Bearbeitung wie beispielsweise Bohren, Drehen, Schleifen oder Fräsen erfolgen. Es ist eine beliebige Formgebung sowohl der Innenkontur als auch der Außenkontur möglich, da kein Konflikt zwischen dem Faserverlauf und der Innenkontur vorliegt. (Wenn die Fasern parallel zur axialen Achse 44 liegen würden, dann könnte keine beliebige Innenkontur durch nachträgliche Bearbeitung hergestellt werden.)

Fasern in einem Scheibenelement 42 sind quer zu der axialen Achse 44 orientiert. Es sind keine Fasern vorgesehen (oder höchstens mit geringem Anteil), welche parallel zur axialen Achse 44 orientiert sind. Es gibt dabei Fasern, die im Wesentlichen parallel zu einer radialen Richtung 54 (bezogen auf die axiale Achse 44) orientiert sind. Dadurch wird eine radiale Fluiddurchlässigkeit des entsprechenden Scheibenelements 42 bei entsprechender poröser Ausbildung bereitgestellt.

In einem Scheibenelement 42 sind die Fasern in der ersten Richtung 50 und in der zweiten Richtung 52 jeweils unidirektional orientiert. Dadurch liegen parallele Faserorientierungen in Teilbereichen in einer ersten radialen Richtung und in einer zweiten senkrecht dazu liegenden radialen Richtung vor.

Es kann vorgesehen sein, dass benachbarte Scheibenelemente 56a, 56b so verdreht zueinander angeordnet sind, dass sich die radiale Faserorientierungsrichtung längs der axialen Achse um einen ansteigenden Winkelschritt ändert. Beispielsweise liegt der Winkelschritt in der Größenordnung von 20°. Dadurch lässt sich eine zyklische Durchrotation von Faserorientierungsrichtungen bezüglich einer festen radialen Achse 58 senkrecht zur axialen Achse 44 erreichen. Insbesondere wird dabei mindestens einmal ein Bereich von 360° durchlaufen. Dadurch lässt sich eine gleichmäßige radiale Flächendurchlässigkeit über die Länge des Innenmantels 40 erreichen.

Es ist auch möglich, dass die Orientierungen der Scheibenelemente 42 bezüglich ihres Faserverlaufs der radialen Achse 58 zufällig gewählt werden oder dass mehrere aufeinanderfolgende oder alle Scheibenelemente 42 bezüglich ihres Faserverlaufs die gleiche Orientierung zu der axialen Achse 44 aufweisen. Je nach Anordnung lassen sich Vorzugsrichtungen bezüglich der Fluiddurchlässigkeit quer zur axialen Achse 44 einstellen oder auch vermeiden.

Beispielsweise lässt sich durch eine zyklische Durchrotation des Winkels zu der festen radialen Achse 58 die radiale Durchströmbarkeit des Kühlungsfluids im Vergleich zu der Durchströmbarkeit in axialer Richtung parallel zur axialen Achse 44 mindestens zweifach größer einstellen. Es hat sich gezeigt, dass beispielsweise ein Verhältnis von 3 zu 1 oder größer für die radiale Durchströmbarkeit im Vergleich zur axialen Durchströmbarkeit einstellbar ist.

Wenn Fasern quer zur axialen Richtung 44 liegen (und nicht parallel), dann hat eine lokale Erosion beim Betrieb der Brennkammer 10 nicht mehr eine Schälwirkung bezüglich Faserschichten oder Faserlagen zur Folge.

Weiterhin ergibt sich eine hohe radiale Materialfestigkeit für den Innenmantel 18.

Die Herstellung lässt sich kosteneffizient durchführen, da von ebenen Platten (die die gleiche Geometrie haben können) als Halbzeug ausgegangen werden kann.

Es ist dabei grundsätzlich möglich, dass, wenn die Brennkammer 10 einen großen Durchmesser aufweist, Scheibenelemente 42 nicht einstückig hergestellt werden, sondern aus Einzelsegmenten und insbesondere Einzelringsegmenten zusammengesetzt werden können. Diese Einzelsegmente können beispielsweise zusätzlich formschlüssig miteinander verbunden werden.

Es kann vorgesehen sein, dass zwischen benachbarten Scheibenelementen 42 eine Dichtung und insbesondere eine Foliendichtung wie beispielsweise eine PTFE-Foliendichtung oder C-Foliendichtung angeordnet ist. Durch eine solche Dichtung (beispielsweise in der Form einer Ringdichtung) lassen sich Spaltströmungen zwischen aneinandergrenzenden Scheibenelementen 42 verhindern. Die Dichtungen können auf einfache Weise positioniert werden, beispielsweise über Nuten.

Der Verbund 46 der Scheibenelemente 42 lässt sich axial auf verschiedene Weise fixieren. Beispielsweise können stoffschlüssige und/oder formschlüssige und/oder kraftschlüssige Verbindungen vorgesehen sein. Beispielsweise wird für eine axiale Verspannung des Verbunds 46 gesorgt. Dies kann beispielsweise über Längszuganker erfolgen. Es kann auch eine Verbindungseinrichtung vorgesehen sein, wie beispielsweise eine äußere Wicklung, die mit verschiedenen Scheibenelementen 42 verbunden ist, um diese "zusammenzuhalten". Es ist auch möglich, dass eine (äußere) axiale Verspannung durch Positionierung des Verbunds 46 in einem Gehäuse mit entsprechender Zentrierung und axialer Fixierung erfolgt.

Die Scheibenelemente sind aus einem porösen Material mit Faserverstärkung hergestellt. Beispielsweise sind sie aus porösem C/C-Werkstoff hergestellt.

Da die Brennkammer 10 aus unterschiedlichen Scheibenelementen 38 zusammengesetzt ist, können diese auch individuell angepasst werden an die entsprechenden Anforderungen. Insbesondere lässt sich die Durchströmbarkeit (radial und/oder axial) lokal anpassen.

Beispielsweise kann die Druckdifferenz zwischen dem Brennraum 12 und einem Reservoir für Kühlfluid variieren; insbesondere bei einem Einkreis-Kühlsystem mit gleichem Versorgungsdruck steigt der Differenzdruck in dem konvergenten Bereich 24 an, da der Druck im Brennraum 12 stromabwärts abfällt. Bei der erfindungsgemäßen Lösung ist es beispielsweise möglich, dies durch entsprechende Ausbildung von Scheibenelementen 38 zu berücksichtigen.

Bei einem zweiten Ausführungsbeispiel eines Innenmantels, welcher in Figur 4 schematisch gezeigt und dort mit 60 bezeichnet ist, sind Scheibenelemente 62 vorgesehen, wobei Scheibenelemente 64a, 64b, 64c mit unterschiedlichen Eigenschaften vorgesehen sein können.

Die unterschiedlichen Eigenschaften können beispielsweise durch unterschiedliche Dicken von Scheibenelementen 62 längs der axialen Achse erreicht werden. Es ist alternativ oder zusätzlich möglich, dass unterschiedliche Scheibenelemente 62 aus unterschiedlichen Materialien hergestellt sind. Es ist auch möglich, dass unterschiedliche Scheibenelemente zwar aus dem gleichen Werkstoff aber mit verschiedenen Durchlässigkeiten hergestellt sind.

Es ist auch möglich, dass eine Gradierung des Werkstoffs eines Scheibenelements durchgeführt wird, um die Porosität und dadurch die Durchströmbarkeit insbesondere in radialer Richtung anzupassen. Beispielsweise wird das poröse Grundmaterial von innen oder außen gasphasen-infiltriert mit dem Ziel, eine unterschiedlich starke Ablagerung von Stoffen zu erreichen bzw. eine Reaktion mit dem inneren Material eines Scheibenelements zu erhalten.

Beispielsweise kann man auch eine Gradierung dadurch erhalten, dass Additive in ringförmigen und insbesondere konzentrischen Zonen zugefügt werden. Solche Additive können auch als Hilfsmittel beim Pyrolisieren oder Konsolidieren von Scheibenelementen dienen, um eine innere Porosität gezielt zu steuern.

Bei dem gezeigten Ausführungsbeispiel 4 ist schematisch ein Zuganker 66 gezeigt, durch den der Verbund der Scheibenelemente 62 zusammenhaltbar ist.

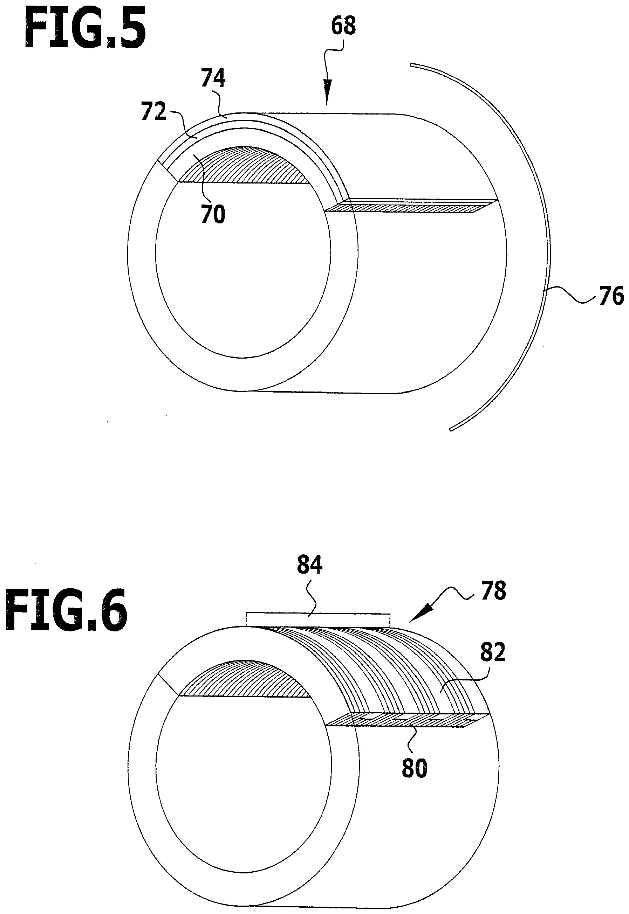

Bei einem dritten Ausführungsbeispiel, welches in Figur 5 gezeigt und dort mit 68 bezeichnet ist, sind innere Scheibenelemente 70 und äußere Scheibenelemente 72, 74 vorgesehen. Bei dem gezeigten Ausführungsbeispiel umgibt ein äußeres Scheibenelement 72 ein inneres Scheibenelement 70, wobei das innere Scheibenelement 70 einen Teil des Brennraums begrenzt. Das äußere Scheibenelement 74 umgibt wiederum das äußere Scheibenelement 72. Dadurch ist eine "Ring-in-Ring-Anordnung" bereitgestellt.

Die Scheibenelemente 70, 72 und 74 sind insbesondere koaxial orientiert.

Es ist beispielsweise möglich, dass die inneren Scheibenelemente 70 aus C/C hergestellt werden. Äußere Scheibenelemente, wie das Scheibenelement 72 und das Scheibenelement 74 können aus einem anderen Material hergestellt werden, welches beispielsweise auch als Oxidationsschutzbarriere dienen kann, falls lokal ein Einbrand erfolgt.

Die äußeren Scheibenelemente 72, 74 müssen dabei nicht die gleiche Dicke wie die inneren Scheibenelemente 70 aufweisen.

In Figur 5 ist schematisch ein Gehäuse 76 angedeutet, über welches sich die Scheibenelemente 70, 72, 74 axial verspannen lassen, um einen Verbund zu bilden.

Bei einem vierten Ausführungsbeispiel eines Innenmantels, welches in Figur 6 schematisch gezeigt und dort mit 78 bezeichnet ist, sind wiederum Scheibenelemente 80 vorgesehen. Es sind dabei lokal äußere Schichten 82 beispielsweise in Ringform eingelagert. Diese können als Oxidationsschutzbarriere dienen, wenn ein entsprechendes Material verwendet wird.

In Figur 6 ist eine Verbindungseinrichtung 84 angedeutet, welche mit einer Mehrzahl von Scheibenelementen 80 verbunden ist. Diese Verbindungseinrichtung 84 bildet einen Mantel aus, um die Scheibenelemente 80 in einem Verbund zu halten. Die Verbindungseinrichtung 84 umfasst beispielsweise einen Faserverbundwerkstoff, welcher beispielsweise über ein Wickelverfahren mit den Scheibenelementen 80 verbunden ist, um eine axiale Stützung der Scheibenelemente 80 zu bewirken. Es lässt sich eine axiale Verbindung in der Art eines Buchrückens mit Buchseiten bewirken.

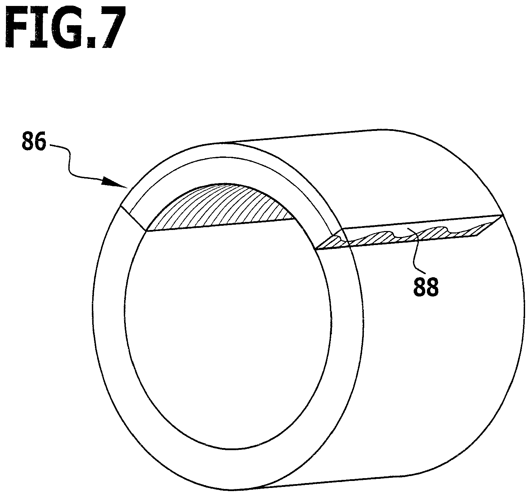

Bei einem fünften Ausführungsbeispiel, welches in Figur 7 gezeigt und dort mit 86 bezeichnet ist, weist eine Außenkontur 88 des Innenmantels einen variierenden Verlauf auf. So wie der Innenkontur aufgrund der Scheibenelemente grundsätzlich ein beliebiger Verlauf gebbar ist, da der Innenkonturverlauf nicht mehr mit dem Schichtverlauf im Faserverbundwerkstoff in Konflikt kommt, lässt sich auch der Außenkontur 88 ein grundsätzlich beliebiger Verlauf geben und eine entsprechende Anpassung an eine Anwendung erreichen.

Es ist beispielsweise auch möglich, dass lokal als Scheibenelemente Sperrscheiben eingesetzt werden, um insbesondere einen wandinternen Kühlfluidfluss in axialer Richtung gezielt zu unterbinden, falls dies erforderlich sein sollte.

Bei einer Ausführungsform kann es auch vorgesehen sein, dass die Scheibenelemente 38 in die Mikrostruktur des Innenmantels integriert sind. Beispielsweise werden vorgeschnittene Gewebe in einer entsprechenden Vorrichtung durch Aufeinanderschichten zusammengesetzt, wobei Fasern ausschließlich quer (d.h. nicht parallel) zur axialen Achse orientiert sind. Anschließend wird beispielsweise eine Harzinfiltration durchgeführt. Durch entsprechende Konsolidierungsprozesse, Härtungsprozesse oder Pyrolyseprozesse wird dann die poröse Mikrostruktur für den entsprechenden Innenmantel bereitgestellt.

Beispielsweise werden die einzelnen Gewebelagen zyklisch gedreht, um eine Ausbildung ähnlich gemäß der Figur 3 zu erhalten.

Der entsprechende Innenmantel ist einstückig ausgebildet und nicht ein Verbund von axial verspannten getrennten Scheibenelementen.

Um individuelle Scheibenelemente für einen Innenmantel herzustellen, ist es auch möglich, dass man diese in einem Pressverfahren unter Verwendung von langen Kurzfasern, Gewebeschnitzeln, Wirrfasern oder ähnlichen und einem Bindemittel herstellt. Durch den Setzvorgang beim Pressen entsteht automatisch eine radiale Vorzugsrichtung für die Fasern. Es ist dabei auch möglich, dass anstatt einzelner individueller Scheibenelemente ein Innenmantel-Grünkörper in einer geeigneten Form direkt in einem Füll-/Pressvorgang hergestellt wird und anschließend durch einen entsprechenden Konsolidierungsprozess, Härtungsprozess oder Pyrolyseprozess der Innenmantel mit poröser Mikrostruktur hergestellt wird. In diesem Falle sind die Scheibenelemente in der Mikrostruktur realisiert.

Bei einer Ausführungsform werden die Scheibenelemente individuell aus mit Fasern in Form von Fasergewebe oder Fasergewirke verstärkten Platten hergestellt. Bei den Platten handelt es sich beispielsweise um Platten aus C/C-Werkstoff mit entsprechende Porosität. Durch mechanische Bearbeitung lässt sich den Scheibenelementen eine prinzipiell beliebige Form geben. Die Scheibenelemente werden aneinander angepasst hergestellt. Es werden Ausnehmungen eingebracht, um Teilbereiche des Brennraums zu bilden. Die axiale Zusammensetzung dieser Ausnehmungen ergibt dann den Brennraum. Die Außenkontur wird entsprechend hergestellt; die axiale Zusammensetzung der Außenkonturen der entsprechenden Scheibenelemente bildet dann die Kontaktfläche 36 für den Außenmantel.

Die Scheibenelemente werden in einem Verbund zusammengehalten. Insbesondere wird für eine axiale Stützung bzw. Verspannung beispielsweise durch eine Verbindungseinrichtung, welche mit einer Mehrzahl von Scheibenelementen verbunden ist, und/oder durch Längszuganker und/oder durch ein äußeres Gehäuse gesorgt.

Durch entsprechende Konturgebung der Außenkontur des Innenmantels werden beispielsweise die Kühlfluidverteilungskanäle 32 hergestellt.

Anschließend wird dann der Außenmantel auf dem Innenmantel hergestellt. Es ist dabei wichtig, dass das Eindringen von Material in den fluiddurchlässigen und insbesondere porösen Innenmantel bei der Herstellung des Außenmantels verhindert wird.

Beispielsweise werden Kontaktflächen des porösen Innenmantels beschichtet, um ein Eindringen zu verhindern.

Hergestellte Kühlfluidverteilungskanäle 32 können mit ausschmelzbaren oder löslichen Materialien wie beispielsweise Wachs ausgefüllt werden. Dadurch ist es beispielsweise möglich, den Außenmantel über einen Nasswickelvorgang auf den bereits hergestellten Innenmantel zu positionieren.

Es kann eine Schutzfolie oder Trennfolie vorgesehen werden. Beispielsweise ist es möglich, eine axiale Stützung von Scheibenelementen des Innenmantels durch geometrische Strukturierung über mechanische Verzahnung mit dem Außenmantel zu erreichen.

Es ist auch möglich, dass beispielsweise ein Thermoplast als Matrixmaterial auf einen Faserverbundwerkstoff-Innenmantel über lokale kurze Erhitzung aufgeschmolzen wird. Dadurch lässt sich eine lokale oberflächliche Verzahnung und Verbindung erreichen, ohne dass das Matrixmaterial infolge Kapilarität eingesogen wird.

Es ist dabei auch grundsätzlich möglich, duroplastische Werkstoffe einzusetzen, sofern die Konsolidierung und Härtung nur über einen kurzen Zeitraum erfolgt und auch temporär kritische niedrige Viskositätswerte nicht unterschritten werden.

## Patentansprüche

1. Brennkammer, umfassend einen Außenmantel (16) und einen Innenmantel (18), welcher einen Brennraum (12) begrenzt und welcher zur Effusionskühlung oder Transpirationskühlung fluiddurchlässig ist, wobei der Innenmantel (18) eine Mehrzahl von längs einer axialen Achse (14) aufeinanderfolgenden Scheibenelementen (38) umfasst, **dadurch gekennzeichnet, dass** Scheibenelemente (38) aus einem Faserverbundwerkstoff hergestellt sind, dass die Scheibenelemente (38) aus einer Platte mit gerichteter Faserorientierung in mindestens einer Richtung hergestellt sind, dass in den Scheibenelementen (38) Fasern quer zur axialen Achse (44) orientiert sind, und dass an den Scheibenelementen (38) mindestens ein Teil der Fasern in einer oder mehreren radialen Richtungen orientiert sind.

2. Brennkammer nach Anspruch 1, **dadurch gekennzeichnet, dass** benachbarte Scheibenelemente (38) aneinander stoßen.

3. Brennkammer nach Anspruch 1 oder 2, **dadurch gekennzeichnet, dass** ein Scheibenelement (38) eine Ausnehmung zur Bildung eines Teilbereichs des Brennraums (12) aufweist.

4. Brennkammer nach einem der vorangehenden Ansprüche, **dadurch gekennzeichnet, dass** Scheibenelemente (38) individuell hergestellt sind.

5. Brennkammer nach einem der vorangehenden Ansprüche, **dadurch gekennzeichnet, dass** Scheibenelemente (38) zu benachbarten Scheibenelementen hin im Wesentlichen ebene Oberflächen (48) aufweisen.

6. Brennkammer nach einem der vorangehenden Ansprüche, **dadurch gekennzeichnet, dass** der Brennraum (12) radialsymmetrisch um die axiale Achse (14) ausgebildet ist.

7. Brennkammer nach einem der vorangehenden Ansprüche, **dadurch gekennzeichnet, dass** der Innenmantel (18) aus einem Faserverbundwerkstoff hergestellt ist.

8. Brennkammer nach einem der vorangehenden Ansprüche, **dadurch gekennzeichnet, dass** der Faserverbundwerkstoff ein keramischer Werkstoff ist.

9. Brennkammer nach einem der vorangehenden Ansprüche, **dadurch gekennzeichnet, dass** Scheibenelemente (38) und/oder der Innenmantel (18) aus C/C-Werkstoff hergestellt sind.

10. Brennkammer nach einem der vorangehenden Ansprüche, **dadurch gekennzeichnet, dass** die Platte Fasergelege oder Fasergewebe mit einer Faserorientierung in einer ersten Richtung (50) und einer zweiten Richtung (52) quer zur ersten Richtung aufweist.

11. Brennkammer nach einem der vorangehenden Ansprüche, **dadurch gekennzeichnet, dass** ein Scheibenelement (38) keine Fasern mit axialer Faserorientierung aufweist.

12. Brennkammer nach einem der vorangehenden Ansprüche, **dadurch gekennzeichnet, dass** unterschiedliche Scheibenelemente (56a, 56b) mit unterschiedlicher Faserorientierung bezogen auf eine Achse (58) senkrecht zur axialen Achse (44) angeordnet sind.

13. Brennkammer nach Anspruch 12, **dadurch gekennzeichnet, dass** Fasern eines ersten Scheibenelements (56a) in einer ersten radialen Richtung orientiert sind und Fasern eines zweiten Scheibenelements (56b) in einer zweiten radialen Richtung orientiert sind, wobei die erste radiale Richtung und die zweite radiale Richtung in einem spitzen Winkel zueinander liegen.

14. Brennkammer nach Anspruch 12 oder 13, **dadurch gekennzeichnet, dass** die radiale Faserorientierungsrichtung von Scheibenelementen (56a, 56b) sich längs der axialen Achse um ansteigende Winkelschritte ändert.

15. Brennkammer nach Anspruch 14, **dadurch gekennzeichnet, dass** mindestens einmal ein Bereich von 360° durchlaufen ist.

16. Brennkammer nach einem der vorangehenden Ansprüche, **dadurch gekennzeichnet, dass** ein Scheibenelement (38) aus einer Mehrzahl von einzelnen Segmenten zusammengesetzt ist.

17. Brennkammer nach einem der vorangehenden Ansprüche, **dadurch gekennzeichnet, dass** die radiale Fluiddurchlässigkeit des Innenmantels (18) größer ist als die axiale Fluiddurchlässigkeit.

18. Brennkammer nach Anspruch 17, **dadurch gekennzeichnet, dass** die radiale Fluiddurchlässigkeit mindestens zweifach größer ist als die axiale Fluiddurchlässigkeit.

19. Brennkammer nach einem der vorangehenden Ansprüche, **dadurch gekennzeichnet, dass** unterschiedliche Scheibenelemente (38) unterschiedliche Fluiddurchlässigkeiten aufweisen.

20. Brennkammer nach einem der vorangehenden Ansprüche, **dadurch gekennzeichnet, dass** zwischen benachbarten Scheibenelementen (38) eine Dichtung angeordnet ist.

21. Brennkammer nach Anspruch 20, **dadurch gekennzeichnet, dass** eine Dichtung als Foliendichtung ausgebildet ist.

22. Brennkammer nach einem der vorangehenden Ansprüche, **dadurch gekennzeichnet, dass** ein inneres Scheibenelement (70) in einem äußeren Scheibenelement (72) angeordnet ist.

23. Brennkammer nach einem der vorangehenden Ansprüche, **dadurch gekennzeichnet, dass** Scheibenelemente (38) durch axiale Verspannung in einem Verbund (46) gehalten sind.

24. Brennkammer nach Anspruch 23, **dadurch gekennzeichnet, dass** Scheibenelemente in einem Gehäuse (76) angeordnet sind.

25. Brennkammer nach Anspruch 23 oder 24, **dadurch gekennzeichnet, dass** Zuganker (66) vorgesehen sind.

26. Brennkammer nach einem der vorangehenden Ansprüche, **dadurch gekennzeichnet, dass** eine Verbindungseinrichtung (84) mit einer Mehrzahl von Scheibenelementen verbunden ist.

27. Brennkammer nach einem der vorangehenden Ansprüche, **dadurch gekennzeichnet, dass** dem Innenmantel (18) Kühlfluidverteilungskanäle (32) zugeordnet sind.

28. Brennkammer nach einem der vorangehenden Ansprüche, **dadurch gekennzeichnet, dass** Scheibenelemente einstückig miteinander verbunden sind.

29. Verfahren zur Herstellung einer Brennkammer mit einem Außenmantel und einem für Fluid zur Effusionskühlung oder Transpirationskühlung durchlässigen Innenmantel, bei dem der Innenmantel aus axial aufeinanderfolgenden Scheibenelementen hergestellt wird, **dadurch gekennzeichnet, dass** die Scheibenelemente aus einem faserverstärkten Werkstoff hergestellt werden, dass die Scheibenelemente (38) aus einer Platte mit gerichteter Faserorientierung in mindestens einer Richtung hergestellt werden, und dass an den Scheibenelementen (38) mindestens ein Teil der Fasern in einer oder mehreren radialen Richtungen orientiert sind.

30. Verfahren nach Anspruch 29, **dadurch gekennzeichnet, dass** Scheibenelemente getrennt hergestellt werden und zu einem Verbund zusammengesetzt werden.

31. Verfahren nach Anspruch 29 oder 30, **dadurch gekennzeichnet, dass** Scheibenelemente aus einem Plattenmaterial hergestellt werden.

32. Verfahren nach einem der Ansprüche 29 bis 31, **dadurch gekennzeichnet, dass** der Werkstoff durch Fasergewebe oder Fasergelege verstärkt ist.

33. Verfahren nach einem der Ansprüche 29 bis 32, **dadurch gekennzeichnet, dass** Fasern in radialer Richtung bezogen auf eine Brennkammerachse orientiert werden.

34. Verfahren nach einem der Ansprüche 29 bis 33, **dadurch gekennzeichnet, dass** zwischen benachbarten Scheibenelementen Dichtungen angeordnet werden.

35. Verfahren nach einem der Ansprüche 29 bis 34, **dadurch gekennzeichnet, dass** Scheibenelemente durch Aneinanderreihen von Gewebelagen oder Gewirkelagen hergestellt werden.

36. Verfahren nach einem der Ansprüche 29 bis 35, **dadurch gekennzeichnet, dass** bei der Herstellung des Außenmantels ein Eindringen von Außenmantelmaterial in den Innenmantel verhindert wird.

37. Verfahren nach Anspruch 36, **dadurch gekennzeichnet, dass** Kühlmittelverteilerkanäle am Innenmantel mit einem entfernbaren Material gefüllt werden.

38. Verfahren nach Anspruch 36 oder 37, **dadurch gekennzeichnet, dass** an Kontaktflächen des Innenmantels ein Schutzmaterial oder Trennmaterial angeordnet wird.

## Claims

1. Combustion chamber, comprising an outer jacket (16) and an inner jacket (18), which delimits a combustion chamber (12) and which is fluid-permeable for effusion cooling or transpiration cooling, wherein the inner jacket (18) comprises a plurality of disc elements (38) succeeding one another along an axial axis (14), **characterized in that** disc elements (38) are made of a fiber composite material, **in that** the disc elements (38) are made from a plate with a directional fiber orientation in at least one direction, **in that** fibers are oriented transversely to the axial axis (44) in the disc elements (38), and **in that** at least a portion of the fibers are oriented in one or more radial directions on the disc elements (38).

2. Combustion chamber in accordance with Claim 1, **characterized in that** adjacent disc elements (38) abut one another.

3. Combustion chamber in accordance with Claim 1 or 2, **characterized in that** a disc element (38) has a recess for forming a partial region of the combustion chamber (12).

4. Combustion chamber in accordance with any one of the preceding Claims, **characterized in that** disc elements (38) are produced individually.

5. Combustion chamber in accordance with any one of the preceding Claims, **characterized in that** disc elements (38) have substantially planar surfaces (48) toward adjacent disc elements.

6. Combustion chamber device in accordance with any one of the preceding Claims, **characterized in that** the combustion chamber (12) is of radially symmetrical configuration about the axial axis (14).

7. Combustion chamber in accordance with any one of the preceding Claims, **characterized in that** the inner jacket (18) is made of a fiber composite material.

8. Combustion chamber in accordance with any one of the preceding Claims, **characterized in that** the fiber composite material is a ceramic material.

9. Combustion chamber in accordance with any one of the preceding Claims, **characterized in that** disc elements (38) and/or the inner jacket (18) are made of C-C material.

10. Combustion chamber in accordance with any one of the preceding Claims, **characterized in that** the plate has laid fiber fabric or woven fiber fabric with a fiber orientation in a first direction (50) and a second direction (52) transverse to the first direction.

11. Combustion chamber in accordance with any one of the preceding Claims, **characterized in that** a disc element (38) has no fibers with an axial fiber orientation.

12. Combustion chamber in accordance with any one of the preceding Claims, **characterized in that** different disc elements (56a, 56b) with different fiber orientations in relation to an axis (58) are arranged perpendicular to the axial axis (44).

13. Combustion chamber in accordance with Claim 12, **characterized in that** fibers of a first disc element (56a) are oriented in a first radial direction and fibers of a second disc element (56b) are oriented in a second radial direction, wherein the first radial direction and the second radial direction are at an acute angle to each other.

14. Combustion chamber in accordance with Claim 12 or 13, **characterized in that** the radial fiber orientation of disc elements (56a, 56b) changes along the axial axis in increasing angular steps.

15. Combustion chamber in accordance with Claim 14, **characterized in that** a range of 360° is passed through at least once.

16. Combustion chamber in accordance with any one of the preceding Claims, **characterized in that** a disc element (38) is composed of a plurality of individual segments.

17. Combustion chamber in accordance with any one of the preceding Claims, **characterized in that** the radial fluid-permeability of the inner jacket (18) is greater than the axial fluid-permeability.

18. Combustion chamber in accordance with Claim 17, **characterized in that** the radial fluid-permeability is at least two times greater than the axial fluid-permeability.

19. Combustion chamber in accordance with any one of the preceding Claims, **characterized in that** different disc elements (38) have different fluid-permeabilities.

20. Combustion chamber in accordance with any one of the preceding Claims, **characterized in that** a seal is arranged between adjacent disc elements (38).

21. Combustion chamber in accordance with Claim 20, **characterized in that** a seal is configured as a film seal.

22. Combustion chamber in accordance with any one of the preceding Claims, **characterized in that** an inner disc element (70) is arranged in an outer disc element (72).

23. Combustion chamber in accordance with any one of the preceding Claims, **characterized in that** disc elements (38) are held in an assembly (46) by means of axial tension.

24. Combustion chamber in accordance with Claim 23, **characterized in that** disc elements are arranged in a housing (76).

25. Combustion chamber in accordance with Claim 23 or 24, **characterized in that** tie rods (66) are provided.

26. Combustion chamber in accordance with any one of the preceding Claims, **characterized in that** a connecting device (84) is connected to a plurality of disc elements.

27. Combustion chamber in accordance with any one of the preceding Claims, **characterized in that** cooling fluid distribution channels (32) are associated with the inner jacket (18).

28. Combustion chamber in accordance with any one of the preceding Claims, **characterized in that** disc elements are connected to each other in one piece.

29. Method for producing a combustion chamber with an outer jacket and an inner jacket that is permeable to fluid for effusion cooling or transpiration cooling, in which method the inner jacket is made of axially successive disc elements, **characterized in that** the disc elements are made of a fiber-reinforced material, **in that** the disc elements (38) are made from a plate with a directional fiber orientation in at least one direction, and **in that** at least a portion of the fibers are oriented in one or more radial directions on the disc elements (38).

30. Method in accordance with Claim 29, **characterized in that** disc elements are made separately and are assembled to form an assembly.

31. Method accordance with Claim 29 or 30, **characterized in that** disc elements are made from a plate material.

32. Method in accordance with any one of Claims 29 to 31, **characterized in that** the material is reinforced by woven fiber fabric or laid fiber fabric.

33. Method in accordance with any one of Claims 29 to 32, **characterized in that** fibers are oriented in the radial direction in relation to a combustion chamber axis.

34. Method in accordance with any one of Claims 29 to 33, **characterized in that** seals are arranged between adjacent disc elements.

35. Method in accordance with any one of Claims 29 to 34, **characterized in that** disc elements are made by lining up woven fabric layers or knitted fabric layers.

36. Method in accordance with any one of Claims 29 to 35, **characterized in that** penetration of outer jacket material into the inner jacket is prevented in the production of the outer jacket.

37. Method in accordance with Claim 36, **characterized in that** coolant distribution channels on the inner jacket are filled with a removable material.

38. Method in accordance with Claim 36 or 37, **characterized in that** a protective material or release material is arranged on contact surfaces of the inner jacket.

## Revendications

1. Chambre de combustion, comprenant une gaine extérieure (16) et une gaine intérieure (18), qui délimite un espace de combustion (12) et qui est perméable au fluide pour le refroidissement par effusion ou le refroidissement par transpiration, la gaine intérieure (18) comprenant une multitude d'éléments de disque (38) se succédant le long d'un axe axial (14), **caractérisée en ce que** les éléments de disque (38) sont fabriqués à partir d'un matériau composite fibreux, que les éléments de disque (38) sont fabriqués à partir d'une plaque ayant une orientation de fibres dirigée dans au moins une direction, **en ce que**, dans les éléments de disque (38), les fibres sont orientées transversalement à l'axe axial (44), et **en ce qu'**au moins une partie des fibres sur les éléments de disque (38) sont orientées dans une ou plusieurs directions radiales.

2. Chambre de combustion selon la revendication 1, **caractérisée en ce que** des éléments de disque (38) voisins sont l'un contre l'autre.

3. Chambre de combustion selon la revendication 1 ou 2, **caractérisée en ce qu'**un élément de disque (38) présente une cavité pour la formation d'une région partielle de l'espace de combustion (12).

4. Chambre de combustion selon l'une des revendications précédentes, **caractérisée en ce que** les éléments de disque (38) sont fabriqués individuellement.

5. Chambre de combustion selon l'une des revendications précédentes, **caractérisée en ce que** les éléments de disque (38) présentent des surfaces (48) sensiblement planes jusqu'aux éléments de disque voisins.

6. Chambre de combustion selon l'une des revendications précédentes, **caractérisée en ce que** la chambre de combustion (12) est conçue en symétrie radiale autour de l'axe axial (14).

7. Chambre de combustion selon l'une des revendications précédentes, **caractérisée en ce que** la gaine intérieure (18) est fabriquée à partir d'un matériau composite fibreux.

8. Chambre de combustion selon l'une des revendications précédentes, **caractérisée en ce que** le matériau composite fibreux est un matériau céramique.

9. Chambre de combustion selon l'une des revendications précédentes, **caractérisée en ce que** des éléments de disque (38) et/ou la gaine intérieure (18) sont fabriqués à partir de matériau C/C.

10. Chambre de combustion selon l'une des revendications précédentes, **caractérisée en ce que** la plaque présente une nappe de fibres ou un tissu de fibres ayant une orientation de fibres dans une première direction (50) et une deuxième direction (52) transversalement à la première direction.

11. Chambre de combustion selon l'une des revendications précédentes, **caractérisée en ce qu'**un élément de disque (38) ne présente aucune fibre ayant une orientation de fibres axiale.

12. Chambre de combustion selon l'une des revendications précédentes, **caractérisée en ce que** sont disposés différents éléments de disque (56a, 56b) ayant une orientation de fibres différente par rapport à un axe (58) perpendiculairement à l'axe axial (44).

13. Chambre de combustion selon la revendication 12, **caractérisée en ce que** des fibres d'un premier élément de disque (56a) sont orientées dans une première direction radiale et que des fibres d'un deuxième élément de disque (56b) sont orientées dans une deuxième direction radiale, la première direction radiale et la deuxième direction radiale étant à un angle aigu l'une par rapport à l'autre.

14. Chambre de combustion selon la revendication 12 ou 13, **caractérisée en ce que** la direction d'orientation radiale des fibres des éléments de disque (56a, 56b) varie le long de l'axe axial par pas angulaires croissants.

15. Chambre de combustion selon la revendication 14, **caractérisée en ce qu'**une région de 360° est parcourue au moins une fois.

16. Chambre de combustion selon l'une des revendications précédentes, **caractérisée en ce qu'**un élément de disque (38) est composé d'une multitude de segments individuels.

17. Chambre de combustion selon l'une des revendications précédentes, **caractérisée en ce que** la perméabilité radiale aux fluides de la gaine intérieure (18) est supérieure à la perméabilité axiale aux fluides.

18. Chambre de combustion selon la revendication 17, **caractérisée en ce que** la perméabilité radiale aux fluides est au moins deux fois supérieure à la perméabilité axiale aux fluides.

19. Chambre de combustion selon l'une des revendications précédentes, **caractérisée en ce que** différents éléments de disque (38) présentent des perméabilités aux fluides différentes.

20. Chambre de combustion selon l'une des revendications précédentes, **caractérisée en ce qu'**un joint est disposé entre des éléments de disque voisins (38) .

21. Chambre de combustion selon la revendication 20, **caractérisée en ce qu'**un joint est conçu sous la forme d'un joint en films.

22. Chambre de combustion selon l'une des revendications précédentes, **caractérisée en ce qu'**un élément de disque intérieur (70) est disposé dans un élément de disque extérieur (72).

23. Chambre de combustion selon l'une des revendications précédentes, **caractérisée en ce que** des éléments de disque (38) sont maintenus par tension axiale en un assemblage (46).

24. Chambre de combustion selon la revendication 23, **caractérisée en ce que** des éléments de disque sont disposés dans un boîtier (76).

25. Chambre de combustion selon la revendication 23 ou 24, **caractérisée en ce que** des ancres de traction (66) sont prévues.

26. Chambre de combustion selon l'une des revendications précédentes, **caractérisée en ce qu'**un système de raccordement (84) est lié à une multitude d'éléments de disque.

27. Chambre de combustion selon l'une des revendications précédentes, **caractérisée en ce que** des canaux de répartition du fluide réfrigérant (32) sont associés à la gaine intérieure (18).

28. Chambre de combustion selon l'une des revendications précédentes, **caractérisée en ce que** des éléments de disque sont reliés les uns aux autres en un bloc.

29. Procédé de fabrication d'une chambre de combustion dotée d'une gaine extérieure et d'une gaine intérieure perméable au fluide pour le refroidissement par effusion ou le refroidissement par transpiration, selon lequel la gaine intérieure est fabriquée à partir d'éléments de disque se succédant axialement, **caractérisé en ce que** les éléments de disque sont fabriqués à partir d'un matériau renforcé de fibres, **en ce que** les éléments de disque (38) sont fabriqués à partir d'une plaque ayant une orientation de fibres dirigée dans au moins une direction, et **en ce qu'**au moins une partie des fibres sur les éléments de disque (38) sont orientées dans une ou plusieurs directions radiales.

30. Procédé selon la revendication 29, **caractérisé en ce que** les éléments de disque sont fabriqués séparément et rassemblés en un assemblage.

31. Procédé selon la revendication 29 ou 30, **caractérisé en ce que** les éléments de disque sont fabriqués à partir d'un matériau en plaque.

32. Procédé selon l'une des revendications 29 à 31, **caractérisé en ce que** le matériau est renforcé par un tissu de fibres ou une nappe de fibres.

33. Procédé selon l'une des revendications 29 à 32, **caractérisé en ce que** les fibres sont orientées dans une direction radiale par rapport à un axe de chambre de combustion.

34. Procédé selon l'une des revendications 29 à 33, **caractérisé en ce que** des joints sont disposés entre les éléments de disque voisins.

35. Procédé selon l'une des revendications 29 à 34, **caractérisé en ce que** les éléments de disque sont fabriqués par juxtaposition de couches de tissu ou couches de mailles.

36. Procédé selon l'une des revendications 29 à 35, **caractérisé en ce qu'**une pénétration du matériau de la gaine extérieure vers la gaine intérieure est empêchée lors de la fabrication de la gaine extérieure.

37. Procédé selon la revendication 36, **caractérisé en ce que** les canaux de répartition du liquide réfrigérant sur la gaine intérieure sont remplis d'une matière éliminable.

38. Procédé selon la revendication 36 ou 37, **caractérisé en ce qu'**un matériau de protection ou un matériau de séparation est disposé sur les surfaces de contact de la gaine intérieure.
